# EUROPEAN PATENT SPECIFICATION

(11) **EP 2 254 449 B1**
(45) Date of publication and mention of the grant of the patent: **19.06.2013**
(21) Application number: 09726383.4
(22) Date of filing: 25.03.2009
(51) Int. Cl.: A47J 31/36

(54) **AUTOMATIC COFFEE MACHINE**
AUTOMATISCHE KAFFEEMASCHINE
MACHINE À CAFÉ AUTOMATIQUE

(30) Priority: 28.03.2008 IT MI20080523
(43) Date of publication of application: 01.12.2010
(73) Proprietor: De'Longhi S.p.A., 31100 Treviso (IT)
(72) Inventor: DE' LONGHI, Giuseppe, I-31100 Treviso (IT)
(74) Representative: Rapisardi, Mariacristina
(86) International application number: PCT/EP2009/002193
(87) International publication number: WO 2009/118177

(56) References cited:
- FR-A- 2 338 028
- FR-A- 2 424 010

## Description

The present invention relates to a coffee machine of the type comprising a brewing unit formed by a brewing cylinder, defining a brewing chamber, and by a piston for closing the brewing chamber, at least one boiler and at least one pump for feeding the brewing water from the boiler to the brewing unit. As is known, a coffee machine has a control unit that, receiving a start signal from the outside (through a pushbutton panel), creates and manages the various electrical signals that control the actuation and the deactivation of the different drink production steps. For example, a signal may control the closing step of the brewing chamber (in an automatic machine), on the opening step of the valve located on the access way to the brewing chamber and the closing of the valve located on the pressure venting way from the brewing chamber, one the pump actuation step and one the discharge step of the empty coffee charge from the brewing cylinder.

In semiautomatic machines, closing the brewing chamber requires an additional manual control. The execution of the entire cycle therefore requires a series of manual controls generated by the user and electrical ones generated by the control unit that can complicate the machine management, limiting its reliability and efficiency.

FR 2 424 010 A1 describes a similar coffee machine.

The technical aim of the present invention therefore is to provide a coffee machine which allows overcoming the technical drawbacks of the prior art.

Within the scope of this aim, an object of the present invention is to produce a coffee machine which has a very simplified user management.

Another object of the invention is to produce an efficient, functional, compact and inexpensive coffee maker.

The technical aim, as well as these and other objects, according to the present invention are achieved by producing a coffee machine according to claim 1.

The coffee machine of the present invention differs in that the actuation of single control member is capable of making the machine run the entire operating cycle.

Other features of the present invention are further defined in the following claims. Further features and advantages of the invention will appear more clearly from the description of a preferred but non-exclusive embodiment of the coffee machine according to the finding, illustrated by way of a non-limiting example in the accompanying drawings, wherein:

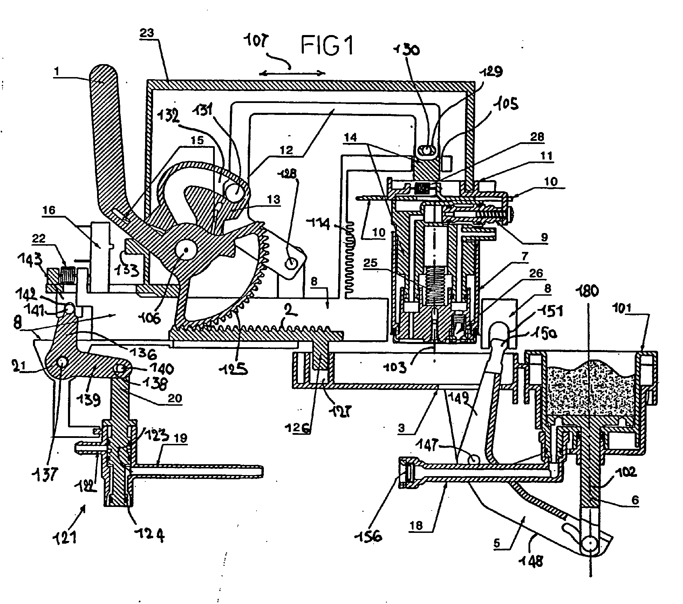

- figure 1 shows a vertical section of the coffee machine according to a preferred embodiment of the invention, in the position for filling the coffee powder;

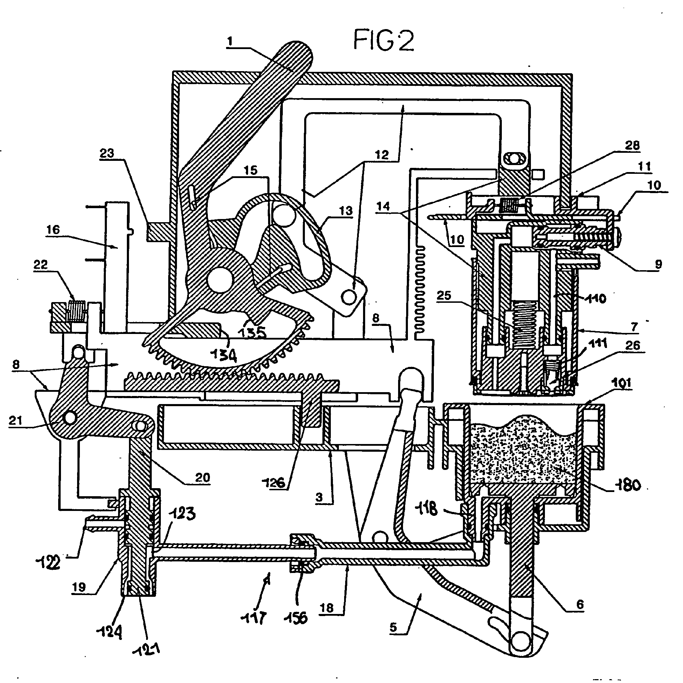

- figure 2 shows the machine of figure 1 in the subsequent step in which the brewing cylinder coaxially aligns with the closing piston;

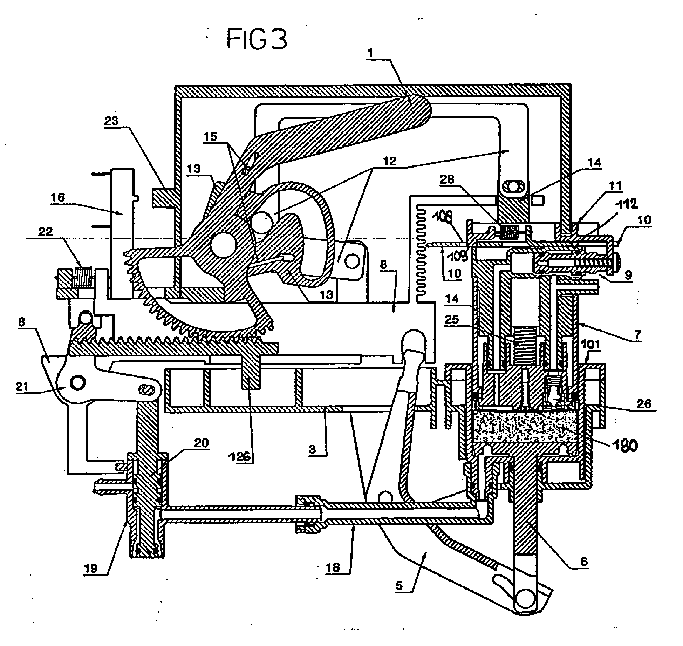

- figure 3 shows the machine of figure 2 in the subsequent step of descent of the closing piston and pressing of the coffee powder;

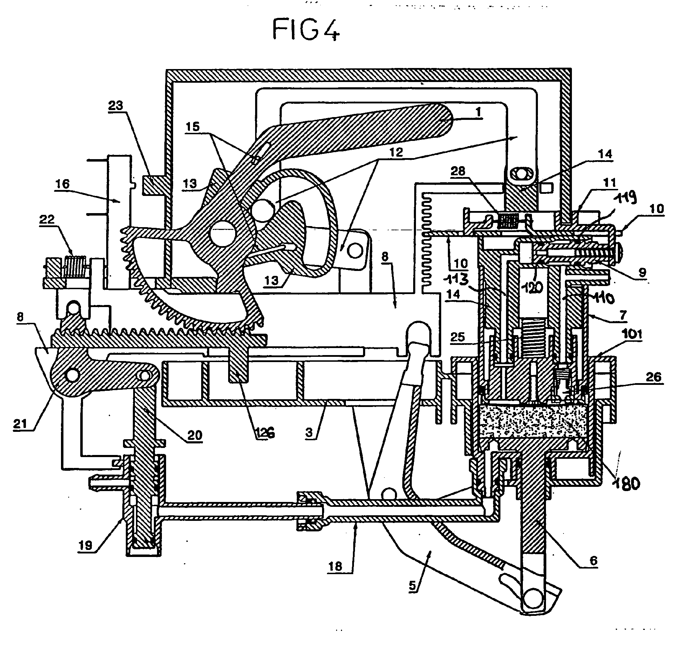

- figure 4 shows the machine of figure 3 in the subsequent step of closure of the valve means of the venting manifold of the conduit conveying the drink outwards and of the conduit for relieving the brewing chamber pressure on the closing piston side, and of locking of the brewing chamber closure;

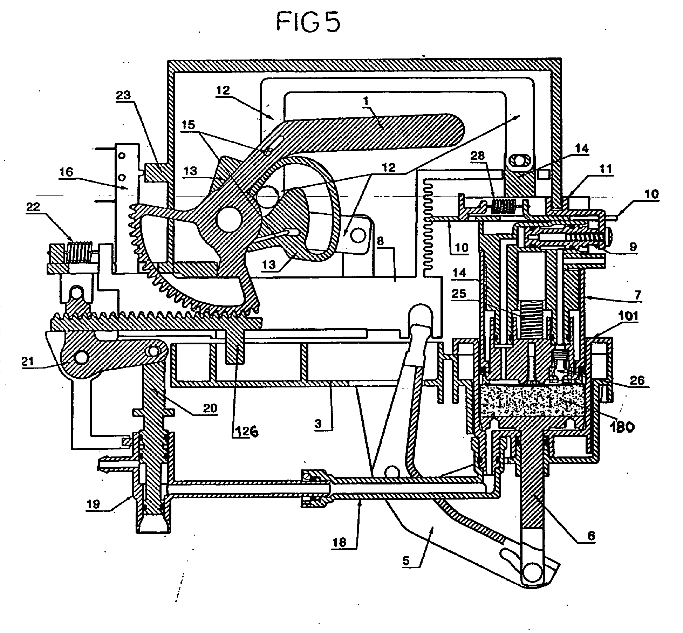

- figure 5 shows the machine of figure 4 in the subsequent step of opening of the connection between the suction way and the delivery way and the closure of the three-way valve discharge way;

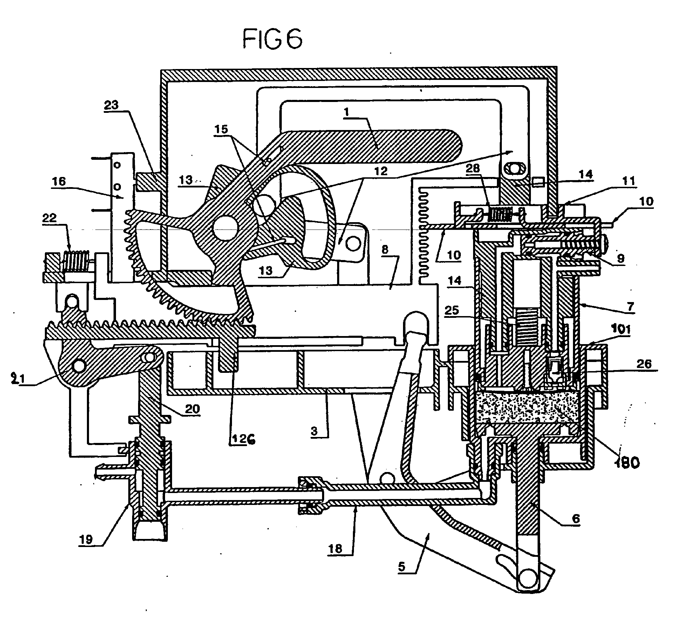

- figure 6 shows the machine of figure 5 in the subsequent step of actuation of the pump micro-switch;

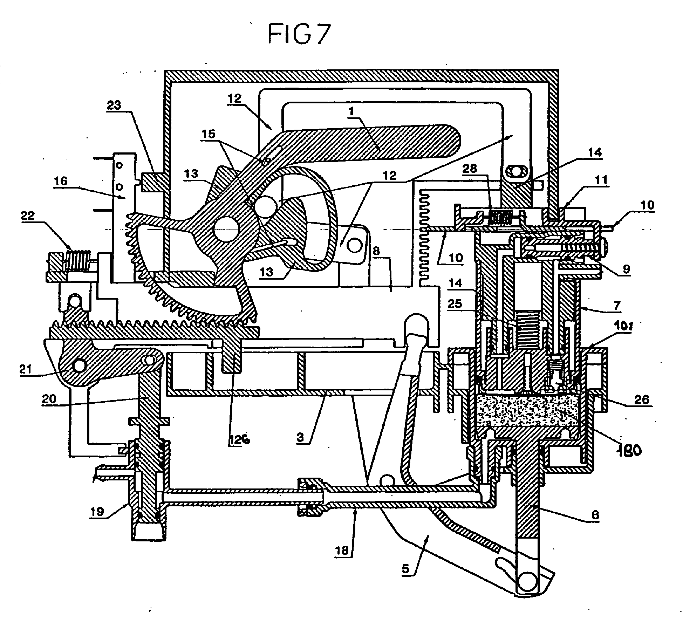

- figure 7 shows the machine of figure 6 in the subsequent step of deactivation of the pump micro-switch;

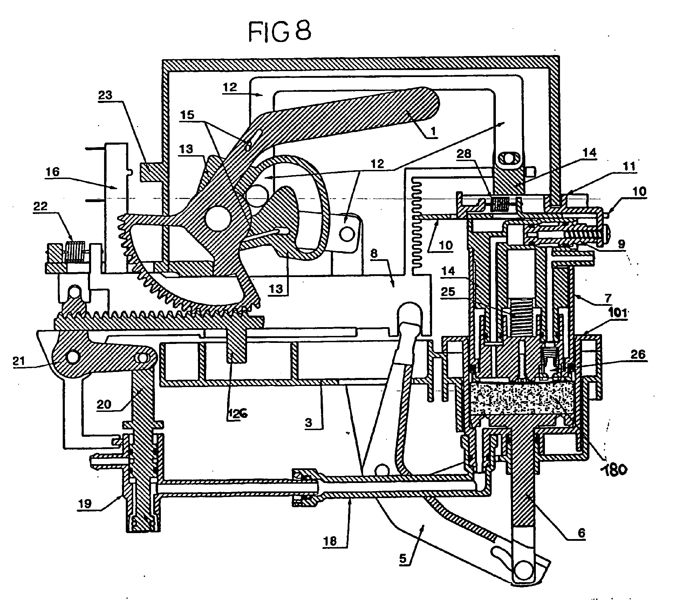

- figure 8 shows the machine of figure 7 in the subsequent step of opening of the three-way valve discharge way and of closure of the connection between the suction way and the delivery way;

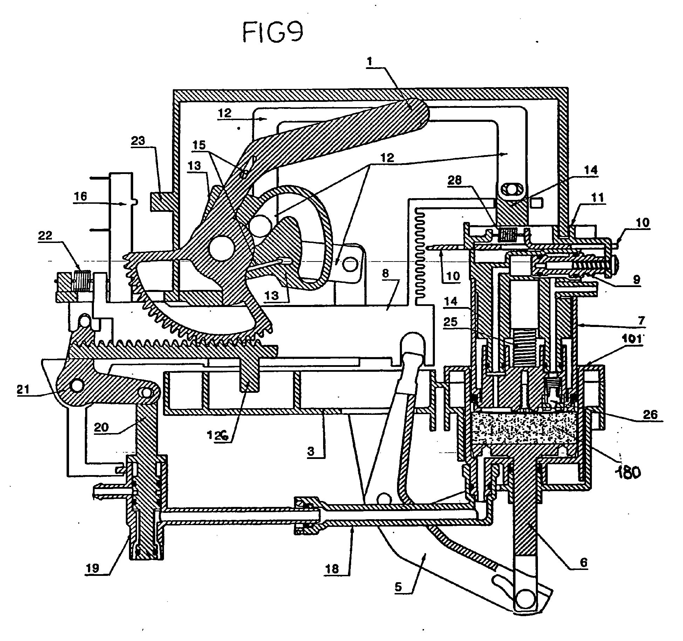

- figure 9 shows the machine of figure 8 in the subsequent step of release of the closure of the brewing chamber, opening of the valve means of the venting manifold of the relieving conduit of the brewing chamber on the closing piston side, and of the conduit for conveying the drink outwards;

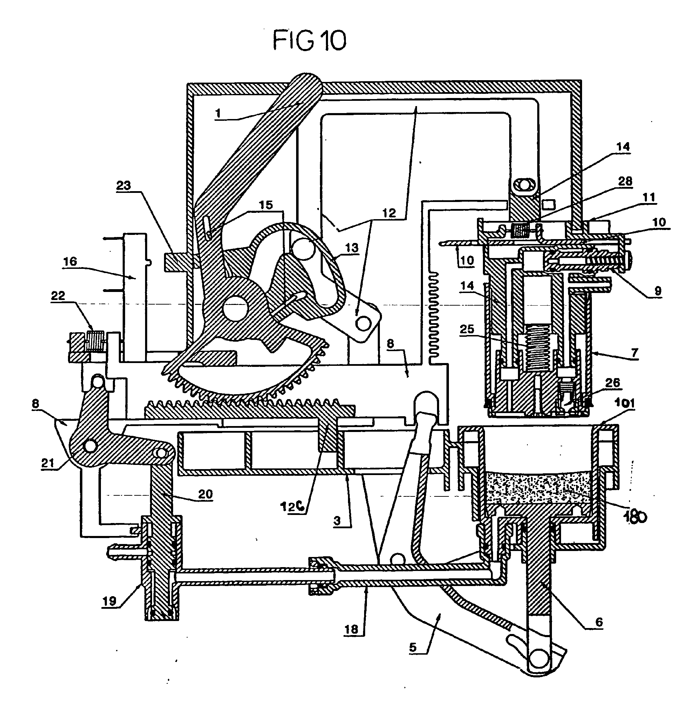

- figure 10 shows the machine of figure 9 in the subsequent step of rise of the closing piston;

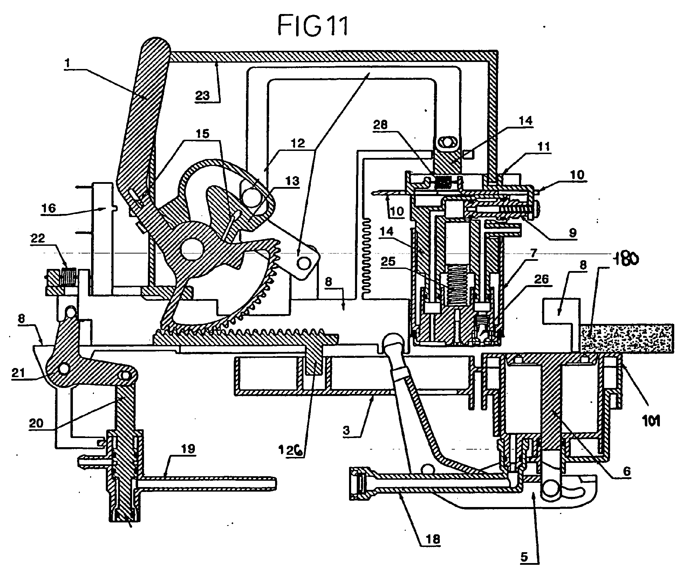

- figure 11 show s the machine of figure 10 i n the subsequent step of separation of the two tube sections constituting the access way to the brewing chamber, and of ejection of the empty coffee charge;

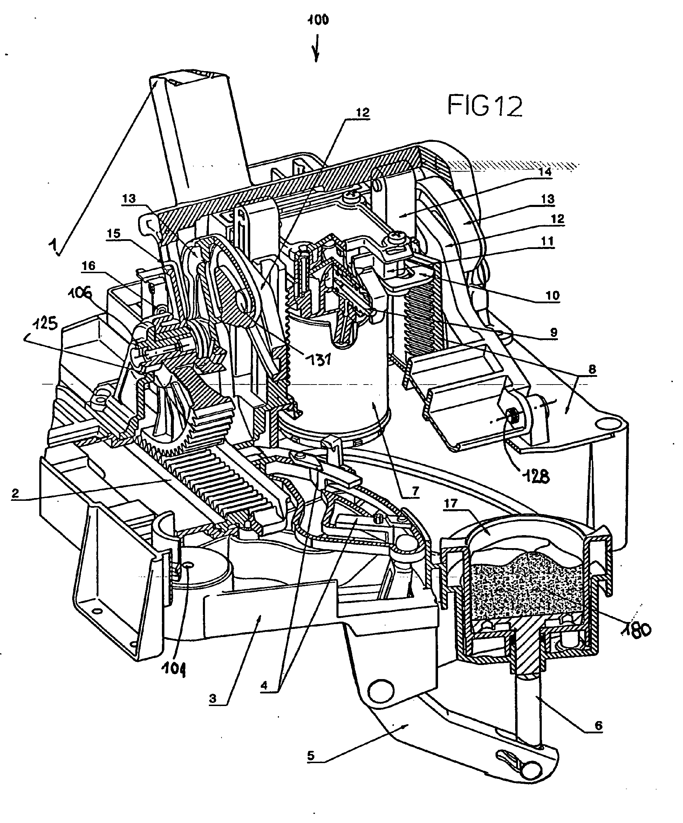

- figure 12 shows a cutaway perspective view of the machine of figure 1 in the step of charging of the coffee powder;

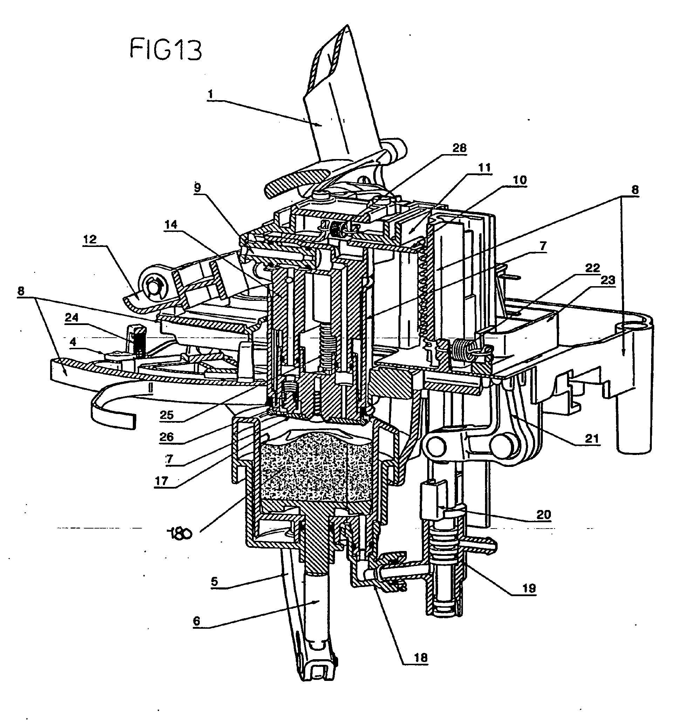

- figure 13 shows a cutaway perspective view of the machine of figure 1 in the step of alignment of the brewing cylinder with the closing piston;

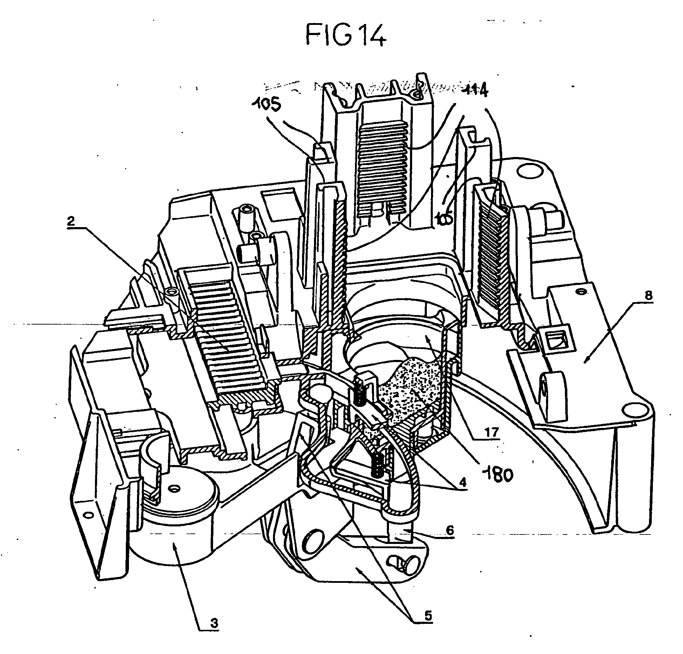

- figure 14 show s another cuta way perspective view of the machine of figure 1 in the step of alignment of the brewing cylinder with the closing piston; and

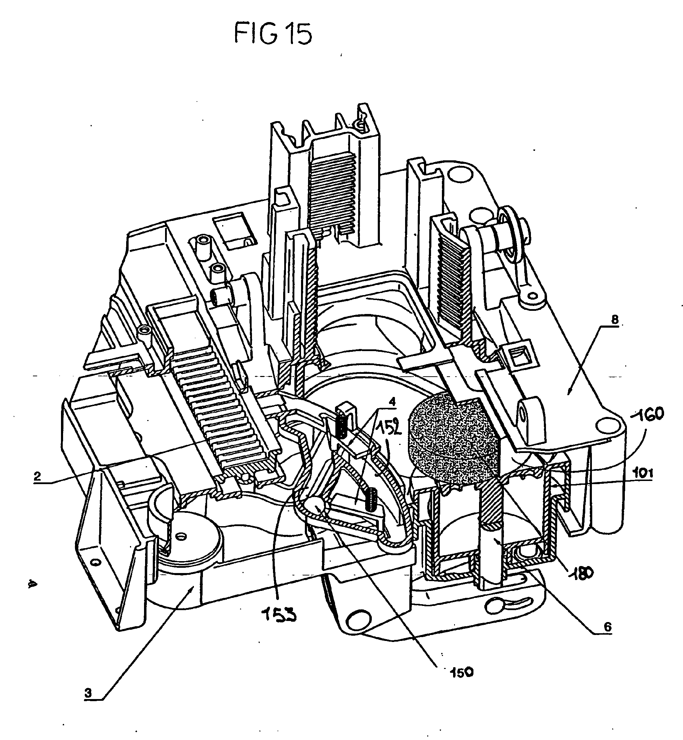

- figure 15 shows a cutaway perspective view of the machine of figure 1 in the step of ejection of the empty coffee pod.

With reference to the figures mentioned above, there is shown a coffee machine globally indicated with number 100.

The coffee machine 100 comprises a main base 8 that supports a brewing unit, at least one boiler (not shown) for heating the brewing water, and at least one pump (not shown) for feeding the brewing unit with the brewing water heated by the boiler. The brewing unit comprises a brewing cylinder 101 defining a brewing chamber 17, and a piston 7 for closing the brewing chamber 17.

The coffee machine 100 further comprises a control member 1 sequentially actuable along a first, a second and at least a third portion of a reversible travel having a single degree of freedom, first kinematic transformation means suitable for transforming the movement of the control member 1 along its first travel portion into a relative rotation between the brewing cylinder 101 and the closing piston 7 for aligning their axes 102 and 103 along a common axis, second kinematic transformation means suitable for transforming the movement of the control member 1 along its second travel portion into a relative shifting of the brewing cylinder 101 and of the closing piston 7 along the common axis for closing the brewing chamber 17, and at least third kinematic transformation means suitable for transforming the movement of the control member 1 along its third travel portion into at least one movement of special locking means of the closure of the brewing chamber 17.

The control member 1, as shown, is a lever pivoted to the base 8, and is manually actuable.

Preferably, the control lever has a travel start lock and a travel end lock (not shown).

In a different embodiment, the control member 1 may take a different shape and be actuated by a special motor.

The means for locking the closure of the brewing chamber 17 comprise a wedge-like element 10, in particular a sheet, suitable for fitting in at least one rack 114 of base 8. Three racks 114 are provided for a safe anchoring of the wedge-like element 10 suitable for engaging the wedge-like element 10 on three sides.

The brewing cylinder 101 is supported by a support arm 3 articulated to base 8 at a rotation axis 104, and supports and coaxially guides therein a piston 6 for ejecting the empty coffee pod 180.

The closing piston 7 is mobile coaxially to a support 14 thereof whereon it is fitted with the interposition of at least one spring 25, and such support 14 is in turn axially shifting along a guide 105 obtained from base 8.

The ejection piston 6 and respectively the closing piston 7 frontally have a distribution of holes for the input of brewing water into the, and respectively for the output of the drink from the, brewing chamber 17.

Support 14 internally has a conduit 110 for conveying the drink that comes out of the brewing chamber 17 outwards.

The conveying conduit 110 is provided with a cream whipping valve 26 moving in contrast and by the action of a spring 111 that keeps it closed until the pressure inside the brewing chamber 17 created by the pump generates a thrust force that overcomes the reaction of spring 111 itself.

Support 14 internally has a manifold 112 as well, for venting at least the conveying conduit 110. Preferably, support 14 also has a conduit 113 for venting the brewing chamber 17 on the side of the closing piston 7 and such conduit leads into the venting manifold 112 as well.

The venting manifold 112 has valve means comprising in particular a gate 9 having a first seal 119 suitable for sealing the outlet of the venting manifold 112 and a second seal 120 suitable for hermetically separating the venting conduit 113 from the conveying conduit 110. The hydraulic circuit of the coffee machine 1 comprises, besides conduit 110 for conveying the drink, a conduit 117 for conveying the water to the brewing chamber 17 having valve means 121 as well for the closure thereof. The conveying conduit 117 may comprise a flexible tube that connects the pump delivery to an access way inside the brewing cylinder 101 obtained through the base of the brewing cylinder 101, or it can comprise a first and a second tube section 19 and 18, of which the first is connected to the pump delivery and is supported fixed-wise by base 8, whereas the second is connected articulated-wise to way 118 for accessing inside the brewing cylinder 101 obtained through the base of the brewing cylinder 101.

The second tube section 18 has a lip seal 156 for sealingly connecting to the first tube section 19. Advantageously, the valve means 121 comprise a three-way valve of which a suction one 122, a delivery one 123, and a relieve one 124 suitable for relieving the pressure inside the brewing chamber 17 on the ejection piston 6 side. The preferred configuration of the parts supported by base 8, as shown, provides for axis 102 of the brewing cylinder 101, axis 103 of the closing piston 7 and the rotation axis 104 of arm 3 to be parallel to one another and orthogonal to the hinging axis 106 of the control member 1 to base 8.

In particular, axis 102 of the brewing cylinder 101, axis 103 of the closing piston 7 and the rotation axis 104 of arm 3 are vertical whereas the hinging axis 106 of the control member 1 to base 8 is horizontal. Of course, axis 103 of the closing piston 7 being fixed, and axis 102 of the brewing cylinder 101 being turnable around axis 104, the common axis along which axis 103 and axis 102 align coincides with axis 103 of the closing piston 7. The first kinematic transformation means comprise a toothed arch 125 integral in rotation to the control member 1 and engaging with a rack 2 slidingly carried by base 8 along a sliding axis preferably orthogonal to both the hinging axis 106 of the control member 1 and to axis 103 of the closing piston 7. Rack 2 has a dragging pin 126 engaged in a slot 127 of the support arm 3. Slot 127 has an active portion that interferes with the moving dragging pin 2 for the rotation of the support arm 3 and a neutral portion that does not interfere with the moving dragging pin 126 so as to not cause the rotation of the support arm 3.

The second kinematic transformation means comprise a second lever 12 pivoted to base 8 with rotation axis 128 preferably parallel to the hinging axis 106 of the control member 1.

A cam 13 for actuating the second lever 12 is interposed between the second lever 12 and the control member 1 by which the second lever 12 is in turn actuable.

The second lever 12 in fact, at the end opposite that of hinging to base 8, has a slot 129 in which a pin 130 of support 14 slidingly couples for transmitting the movement between the second lever 12 and support 14.

The second lever 12 further has a pin 131 in intermediate position that slidingly couples in a slot 132 of cam 13 for transmitting the movement between cam 13 and the second lever 12.

Cam 13 is pivoted to base 8 with the same rotation axis 106 as the control member 1 it is associated to through an elastic compensation element 15, in particular a torsion spring, suitable for separating the rotation of cam 13 from the rotation of the control member 1 when the resistance to rotation offered by cam 13 exceeds a suitable value.

Slot 132 of cam 13 has an active portion that, when cam 13 is moving, cooperates with the second pin 131 for moving support 14 through lever 12 and a neutral portion that, when cam 13 rotates, does not cause the movement of lever 12 and consequently, of support 14 neither.

The third kinematic transformation means comprise a first carriage 11 supporting the wedge-like element 10, constrained fixed-wise to support 14 in the movement direction parallel to axis 103 of the closing piston 7 but released from support 14 in a movement direction 107 orthogonal to both axis 103 of the closing piston 7 and to the rotation axis 106 of the control member 1.

The wedge-like element 10 is slidingly supported with respect to the first carriage 11 along the movement direction 107 and is connected to carriage 11 by a spring 28.

The first carriage 11 also has a tooth 109 that engages in a slit 108 of the wedge-like element 10 for limiting the relative movement width.

The third kinematic transformation means further comprise a second carriage 23 supported by base 8 and associated to the first carriage 11 in an integral fashion in the shifting direction 107 of the first carriage 11 and in a freely sliding manner with respect to the first carriage 11 in the direction of axis 103 of the closing piston 7.

The second carriage 23 is connected to base 8 by a return spring 22.

The second carriage 23 further has a stop 134 suitable for intercepting an interference tooth 135 integral to the control member 1.

The third kinematic transformation means are also suitable for transforming the movement of the control member 1 along the third travel portion in an actuation of the valve means of manifold 112. Advantageously, the third kinematic transformation means are also suitable for transforming the movement of the control member 1 along the third portion of its travel in an actuation of an actuator 133 especially fixed to the second carriage 23 and suitable for actuating a switch 16, more precisely a micro-switch, for actuating the pump.

Machine 1 further comprises fourth kinematic transformation means suitable for transforming the movement of the control member 1 along the third travel portion into an actuation of the valve means 121 for opening the connection between the suction way 122 and the delivery way 123 and closing the relieve way 124; and fifth kinematic transformation means only active during the travel return of the control member 1 for transforming the movement into an extraction and subsequent retraction of the ejection piston 6 for ejecting the empty coffee pod.

The fourth kinematic transformation means comprise a first rocker arm 21 pivoted to base 8 with hinging axis 137 parallel to the hinging axis 106 of the control member 1.

The first rocker arm 21 has a first arm 139 operatively connected to gate 20 of the valve means 121 and a second movement gripping arm 136 operatively connected to the second carriage 23.

In particular, the first arm 139 has a slot 138 wherein a pin 140 integral to gate 20 is slidingly inserted, whereas the second arm 136 has a pin 141 sliding in a slot 142 obtained in a formation 143 of the second carriage 23.

The fifth kinematic transformation means comprise a second rocker arm 5 pivoted to the support arm 3 at a hinging axis 147 orthogonal to axis 102 of the brewing cylinder 101.

The second rocker arm 5 comprises a first arm 148 operatively connected to the stem of the ejection piston 6 and a second movement gripping arm 149 having a head 150 sliding in a cam profile 151 obtained on base 8.

The cam profile 151 has a neutral portion 152 in which head 150 engages during the forward travel of the control member 1 and an active portion 153 in which head 150 engages during the return travel of the control member 1.

Two deflecting members 4 are provided along the cam profile 151 suitable for deflecting head 150 from the neutral portion 152 to the active portion 153 and vice versa.

The deflecting members 4 substantially are small shaped blocks carried in an elastically retractable recessed manner inwards of the body of base 8 so as to free the passage to head 150 when they show it one of their faces inclined as a ramp and prevent the passage to head 150 when they show it one of their faces orthogonal to its movement direction.

The operation of the coffee machine according to the invention clearly appears from what described and illustrated, and in particular it substantially is as follows.

The initial position of the movement travel of the control member 1 matches the step of filling the coffee pod 180.

The control lever 1 is raised and rack 2 is in the maximum forward position. The rotating arm 3 is open in filling position with the second rocker arm 5 lowered and the ejection piston 6 at its bottom dead centre. Support 14 is completely raised with the closing piston 7 in extended position thanks to spring 25 and with gate 9 anchored to the first carriage 11 in open position of the vent for conduits 110 and 113. The pump micro-switch is off.

During the first travel portion of the control lever 1, rack 2 advances and thanks to the action of the dragging pin 126 in the active portion of slot 127, the rotation arm 3 rotates up to arranging the brewing cylinder 101 coaxially to the closing piston 7 and sealingly engaging the second tube section 18 to the first tube section 19. When the second tube section 18 meets the first tube section 19, for jointing to it in a perfect manner it carries out a settling rotation around the articulation axis to the inlet way 118. During this first travel portion, head 150 slides on the neutral portion 152 of cam 150 so as to not cause the raising of the ejection piston 6. Support 14 is still in a completely raised position thanks to cam 13 that rotating along with the control lever 1 makes the neutral portion of its slot 132 slide on pin 131. During the second travel portion of the control lever 1, rack 2 further advances but the dragging pin 126 slides in the inactive portion of slot 127 therefore without moving the rotation arm 3 nor consequently the brewing cylinder 101. Head 150 continues sliding on the neutral portion 152 of cam 150 so as to not cause the raising of the ejection piston 6. The dragging cam 13 slides the active portion of its slot 132 on pin 131 so as to lower the second lever 12 support 14 it hooked to, which lowers engaging into the brewing chamber 17 until coffee is compressed to such an extent as to operate the torsion spring 15. The torsion spring 15 compensates the rotation of the control lever 1 therefore keeping support 14 at a constant height as to advancement of the control lever 1 proceeds. Before the torsion spring 15 starts working the closing piston 7 is pushed upwards by the initial resistance opposed by the coffee that compresses spring 25.

During the third travel portion of the control lever 1 it advances further. The rotation arm 3, cam 13 (and consequently lever 12 and support 14) continue to remain stationary. The interference tooth 135 impacts into stop 134 actuating the second carriage 23 that also drags the first carriage 11 in the shifting direction 107. By shifting, the first carriage 11 drags gate 9 which closes the respective venting conduits 110 and 113. The first carriage 11, through spring 28, also drags the wedge-like element 10 which engages on racks 114. The wedge-like element 10 vertically locks the brewing unit before the brewing process that generates pressure in the brewing chamber 17 begins. The sliding of the second carriage 23 also causes the switching of the valve means 121 by the actuation of the first rocker arm 21 that moves gate 20 placing in communication the suction way 122 with the delivery way 123 and closing the relieve way 124. In the final part of the third travel portion of the control lever 1, actuator 133 actuates the pump actuation micro-switch 16. The pump pushes the hot water under pressure in the brewing chamber 17. The drink produces goes up through the open cream whipping valve 26 thanks to the pressure created by the pump and comes out of the conveying conduit 110. The return spring 22 at the beginning of the return- movement travel of the control lever 1 returns the second carriage 23 to the initial position.

In the return of the movement travel of the control lever 1, the steps described above for the advancement are repeated in the reverse sequence, and in addition, the system for ejecting the empty coffee pod 180 is actuated since at the end of the advancement, head 150 is deviated in the active portion 153 of the cam profile 151. In particular, during the rotation of the rotation arm 3 the ejection piston 6 first rises moving the empty coffee pod out of the brewing chamber 17 so that it falls, pushed by a fixed partition 160 on base 8, in a special container located at the bottom of base 8. It should be noted that in the return travel of the control member 1, opening the venting for the conveying conduit 110 allows the drink residue present therein to be sucked outwards (in a cup), while opening the discharge way 124 of the three-way valve 121 allows both emptying the brewing water residue present in the connection conduit 117 between the pump and the brewing cylinder and, in combination with the opening of the relieve of conduit 113, evenly relieving the pressure inside the brewing chamber 17 acting on both sides of the empty coffee pod 180 so as to leave a very dry empty pod 180 ready to be discharged.

The coffee machine thus conceived is susceptible to numerous modifications and variants, all falling within the inventive concept as defined in the claims; moreover all details can be replaced by other technically equivalent details.

In the practice, the materials used as well as the sizes, can be whatever, according to the technical requirements and to the prior art.

## Claims

1. Coffee machine (100) of the type comprising a brewing cylinder (101), defining a brewing chamber (17), a piston (7) for closing said brewing chamber (17), and means (10, 14) for locking the closure of said brewing chamber (17), **characterized in that** it comprises a control member (1) sequentially actuable along a first, a second and at least a third portion of a reversible travel having a single degree of freedom, first kinematic transformation means suitable for transforming the movement of said control member (1) along said first travel portion into a relative rotation between said brewing cylinder (101) and said closing piston (7) for aligning their axes (102, 103) along a common axis, second kinematic transformation means suitable for transforming the movement of said control member (1) along said second travel port ion into a relative shifting of said brewing cylinder (101) and of said closi ng piston (7) along said common axis for closing said brewing chamber (17), and at least third kinematic transformation means suitable for transforming the movement of said control member (1) along said third travel portion into at least one movement of said locking means (10, 14) for locking the closure of said brewing chamber (17), and **in**
**that** it has a support arm (3) of said brewing cylinder (10) articulated to the base (8) of said machine.

2. Coffee machine according to claim 1, **characterized in that** said control member (1) is a lever pivoted to said base.

3. Coffee machine according to one or more of the previous claims, **characterized in that** said support arm (3) has a hinging axis to said base (8) parallel to the axis of said closing piston (7).

4. Coffee machine according to one or more of the previous claims, **characterized in that** said control lever (1) has a hinging axis to said base (8) orthogonal to the axis of said closing piston (7).

5. Coffee machine according to one or more of the previous claims, **characterized in that** said base (8) has a guide for guiding a support of said closing piston in shifting in the direction of the axis of said closing piston (7).

6. Coffee machine according to one or more of the previous claims, **characterized in that** said support (14) internally has a conduit (110) for conveying the drink that comes out of said brewing chamber (17) outwards, and a venting manifold (112) of said conveying conduit,
said support internally having a venting conduit (113) of said brewing chamber (17) on the side of said closing piston (7) communicating with said venting manifold,
said venting manifold having valve (9) means for closing the vent of said conduit for conveying the drink that comes out of said brewing chamber (17) outwards and of said venting conduit (113) of said brewing chamber on the side of said closing piston (7).

7. Coffee machine according to one or more of the previous claims, **characterized in that** said first kinematic transformation means comprise a toothed arch (125) integral in rotation to said control member (1) and engaging with a rack (2) slidingly carried by said base (8).

8. Coffee machine according to one or more of the previous claims, **characterized in that** said rack (2) slides along a sliding axis orthogonal to both the hinging axis (106) of said control member (1) and to the axis (103) of said closing piston (7), and
**in that** said rack (2) has a dragging pin (126) engaged in a slot of said support arm (3) for the actuation thereof.

9. Coffee machine according to one or more of the previous claims, **characterized in that** said second kinematic transformation means comprise a second (12) pivotes to said base (8) and operatively connected to said support (14) for its actuation and an actuating cam (13) of said second lever (12) interposed between said second lever (12) and said control member (1) by which said second lever (12) is in turn actuable,
said cam being pivoted to said base with the same rotation axis 106 as said control member it is associated to through an elastic compensation element (15) suitable for separating the rotation of said cam (13) from the rotation of said control member (1) when the resistance to rotation offered by said cam (13) exceeds a suitable value, and
said second lever (12) being pivoted to said base (8) with rotation axis parallel to the hinging axis (106) of said control member (1).

10. Coffee machine according to one or more of the previous claims, **characterized in that** said locking means comprise a wedge-like element (10) suitable for engaging in at least one rack (114) fixed on said base (8).

11. Coffee machine according to one or more of the previous claims, **characterized in that** said third kinematic transformation means comprise a first carriage (11) supporting said wedge-like element (10), constrained fixed-wise to said support in the movement direction parallel to the axis of said closing piston (7) but released from said support in the movement direction orthogonal to both the axis of said closing piston (7) and to the rotation axis of said control member (1),
said wedge-like element (10) being slidingly supported with respect to said first carriage (11) in the movement direction orthogonal to both the axis of said closing piston (7) and to the rotation axis of said control member (1),
said wedge-like element (10) being connected to said carriage (11) by a spring.

12. Coffee machine according to one or more of the previous claims, **characterized in that** said third kinematic transformation means further comprise a second carriage (23) supported by said base (8) and associated to said first carriage (11) in an integral fashion in the movement direction orthogonal to both the axis of said closing piston (7) and to the rotation axis of said control member (1) and in a freely sliding manner with respect to said first carriage (11) in the direction of the axis of said closing piston (7),
said second carriage (23) carrying an actuator (133) suitable for actuating an activation switch (16) of a water feeding pump to said brewing chamber.

13. Coffee machine according to one or more of the previous claims, **characterized in that** it comprises fourth kinematic transformation means suitable for transforming the movement of said control member (1) along said third travel portion in an actuation of a three-way valve (121) for opening the connection between a suction way (122) and a delivery way (123) and closing a venting way (124).

14. Coffee machine according to one or more of the previous claims, **characterized in that** it comprises fifth kinematic transformation means only active during the return travel of said control member (1) for transforming its movement into an extraction and subsequent retraction of said ejection piston (6) for ejecting the empty coffee pod, and
**in that** said fifty kinematic transformation means comprise a second rocker arm (5) pivoted to said support arm (3) and comprising a first arm (148) operatively connected to the stem of said ejection piston (6) and a second movement gripping arm (149) having a head (150) sliding in a cam profile (151) obained on said base (8),
said second rocker arm (5) having a hinging axis (147) orthogonal to the axis (102) of said brewing cylinder (101),
said cam profile (151) has a neutral portion (152) in which said head (150) engages during said forward travel of said control member (1) and an active portion (153) in which said head (150) engages during said return travel of said control member (1).

15. Coffee machine according to one or more of the previous claims, **characterized in that** said fourth kinematic transformation means comprise a first rocker arm (21) pivoted to said base (8) and having a first arm (139) operatively connected to the gate (20) of said three-way valve (121) and a second movement gripping arm (136) operatively connected to said second carriage (23),
said first rocker arm (21) having a hinging axis (137) parallel to the hinging axis (106) of said control member (1).

## Patentansprüche

1. Kaffeemaschine (100) des Typs umfassend einen Brühzylinder (101), definierend eine Brühkammer (17), einen Kolben (7) zum Verschluss der Brühkammer (17) und Mittel (10, 14) zum Verriegeln des Verschlusses der Brühkammer (17), **dadurch gekennzeichnet, dass** sie ein Steuerglied (1) umfasst, das sequenziell entlang einem ersten, einem zweiten und mindestens einem dritten Abschnitt eines umkehrbaren Laufes, aufweisend einen einzigen Freiheitsgrad, betätigbar ist, erste kinematische Umwandlungsmittel, die dazu geeignet sind, die Bewegung des Steuergliedes (1) entlang dem ersten Laufabschnitt in eine relative Rotation zwischen dem Brühzylinder (101) und dem Verschlusskolben (7) zum Ausrichten ihrer Achsen (102, 103) entlang einer gemeinsamen Achse umzuwandeln, zweite kinematische Umwandlungsmittel, die dazu geeignet sind, die Bewegung des Steuergliedes (1) entlang dem zweiten Laufabschnitt in eine relative Verschiebung des Brühzylinders (101) und des Verschlusskolbens (7) entlang der gemeinsamen Achse zum Verschluss der Brühkammer (17) umzuwandeln, und mindestens dritte kinematische Umwandlungsmittel, die dazu geeignet sind, die Bewegung des Steuergliedes (1) entlang dem dritten Laufabschnitt in mindestens eine Bewegung der Verriegelungsmittel (10, 14) zum Verriegeln des Verschlusses der Brühkammer (17) umzuwandeln, und dass sie einen Trägerarm (3) des Brühzylinders (101) aufweist, der an der Basis (8) der Maschine angelenkt ist.

2. Kaffeemaschine nach Anspruch 1, **dadurch gekennzeichnet, dass** das Steuerglied (1) ein Hebel ist, der drehbar an der Basis gelagert ist.

3. Kaffeemaschine nach einem oder mehreren der vorangehenden Ansprüche, **dadurch gekennzeichnet, dass** der Trägerarm (3) eine Schwenkachse an der Basis (8) aufweist, die parallel zur Achse des Verschlusskolbens (7) ist.

4. Kaffeemaschine nach einem oder mehreren der vorangehenden Ansprüche, **dadurch gekennzeichnet, dass** der Steuerhebel (1) eine Schwenkachse an der Basis (8) aufweist, die orthogonal zur Achse des Verschlusskolbens (7) ist.

5. Kaffeemaschine nach einem oder mehreren der vorangehenden Ansprüche, **dadurch gekennzeichnet, dass** die Basis (8) eine Führung zum Führen eines Trägers des Verschlusskolbens beim Verschieben in die Richtung der Achse des Verschlusskolbens (7) aufweist.

6. Kaffeemaschine nach einem oder mehreren der vorangehenden Ansprüche, **dadurch gekennzeichnet, dass** der Träger (14) innen eine Leitung (110) zum Fördern des Getränks, das aus der Brühkammer (17) herauskommt, sowie einen Entlüftungsverteiler (112) der Förderleitung aufweist, wobei der Träger innen eine Entlüftungsleitung (113) der Brühkammer (17) an der Seite des Verschlusskolbens (7) aufweist, die in Verbindung mit dem Entlüftungsverteiler steht, wobei der Entlüftungsverteiler Ventilmittel (9) zum Verschluss der Entlüftung der Leitung zum Fördern des aus der Brühkammer (17) herauskommenden Getränks und der Entlüftungsleitung (113) der Brühkammer an der Seite des Verschlusskolbens (7) aufweist.

7. Kaffeemaschine nach einem oder mehreren der vorangehenden Ansprüche, **dadurch gekennzeichnet, dass** die ersten kinematischen Umwandlungsmittel einen Zahnbogen (125) umfassen, der einstückig mit dem Steuerglied (1) rotiert und in eine Zahnstange (2) eingreift, die gleitend von der Basis (8) getragen wird.

8. Kaffeemaschine nach einem oder mehreren der vorangehenden Ansprüche, **dadurch gekennzeichnet, dass** die Zahnstange (2) entlang einer Gleitachse gleitet, die sowohl zur Schwenkachse (106) des Steuerglieds (1) als auch zur Achse (103) des Verschlusskolbens (7) orthogonal ist und dass die Zahnstange (2) einen Ziehstift (126) aufweist, der in einen Schlitz des Trägerarms (3) für dessen Betätigung eingreift.

9. Kaffeemaschine nach einem oder mehreren der vorangehenden Ansprüche, **dadurch gekennzeichnet, dass** die zweiten kinematischen Umwandlungsmittel einen zweiten Hebel (12) umfassen, der drehbar an der Basis (8) gelagert und mit dem Träger (14) für seine Betätigung wirkverbunden ist, und einen Betätigungsnocken (13) des zweiten Hebels (12), der zwischen dem zweiten Hebel (12) und dem Steuerglied (1) liegt, durch den der zweite Hebel (12) wiederum betätigbar ist, wobei der Nocken drehbar an der Basis mit derselben Rotationsachse (106) gelagert ist, wie das Steuerglied, mit dem es durch ein elastisches Kompensationselement (15) verbunden ist, das dazu geeignet ist, die Rotation des Nockens (13) von der Rotation des Steuerglieds (1) zu trennen, wenn der Widerstand gegen die vom Nocken (13) gebotene Rotation einen geeigneten Wert übersteigt, und wobei der zweite Hebel (12) drehbar an der Basis (8) mit der Rotationsachse parallel zur Schwenkachse (106) des Steuerglieds (1) gelagert ist.

10. Kaffeemaschine nach einem oder mehreren der vorangehenden Ansprüche, **dadurch gekennzeichnet, dass** die Verriegelungsmittel ein keilähnliches Element (10) umfassen, das dazu geeignet ist, in mindestens eine Zahnstange (114) einzugreifen, die an der Basis (8) fixiert ist.

11. Kaffeemaschine nach einem oder mehreren der vorangehenden Ansprüche, **dadurch gekennzeichnet, dass** die dritten kinematischen Umwandlungsmittel einen ersten Schlitten (11) umfassen, der das keilähnliche Element (10) trägt, das fixiert am Träger in der Bewegungsrichtung parallel zur Achse des Verschlusskolbens (7) eingespannt ist, jedoch vom Träger in der Bewegungsrichtung orthogonal sowohl zur Achse des Verschlusskolbens (7) als auch zur Rotationsachse des Steuerglieds (1) losgelassen wird, wobei das keilähnliche Element (10) im Vergleich zum ersten Schlitten (11) in der Bewegungsrichtung orthogonal sowohl zur Achse des Verschlusskolbens (7) als auch zur Rotationsachse des Steuerglieds (1) gleitend getragen wird, wobei das keilähnliche Element (10) mit dem Träger (11) durch eine Feder verbunden ist.

12. Kaffeemaschine nach einem oder mehreren der vorangehenden Ansprüche, **dadurch gekennzeichnet, dass** die dritten kinematischen Umwandlungsmittel ferner einen zweiten Schlitten (23) umfassen, der von der Basis (8) getragen wird und mit dem ersten Schlitten (11) auf einstückige Art und Weise verbunden ist, in der Bewegungsrichtung orthogonal sowohl zur Achse des Verschlusskolbens (7) als auch zur Rotationsachse des Steuerglieds (1) und auf freie, gleitende Art und Weise im Vergleich zum ersten Träger (11) in der Richtung der Achse des Verschlusskolbens (7), wobei der zweite Schlitten (23) einen Aktor (133) trägt, welcher für die Betätigung eines Schalters (16) zur Aktivierung einer Pumpe zur Zufuhr von Wasser zur Brühkammer geeignet ist.

13. Kaffeemaschine nach einem oder mehreren der vorangehenden Ansprüche, **dadurch gekennzeichnet, dass** sie vierte kinematische Umwandlungsmittel umfasst, die dazu geeignet sind, die Bewegung des Steuerglieds (1) entlang dem dritten Laufabschnitt in eine Betätigung eines Drei-Wege-Ventils (121) zum Öffnen der Verbindung zwischen einem Ansaugweg (122) und einem Lieferweg (123) und zum Schließen eines Entlüftungswegs (124) umzuwandeln.

14. Kaffeemaschine nach einem oder mehreren der vorangehenden Ansprüche, **dadurch gekennzeichnet, dass** sie fünfte kinematische Umwandlungsmittel umfasst, die nur während des Rücklaufs des Steuerglieds (1) aktiv sind, um seine Bewegung in ein Ausziehen und anschließendes Zurückziehen des Ausstoßkolbens (6) zum Ausstoßen des leeren Kaffeepads umzuwandeln, und dass die fünften kinematischen Umwandlungsmittel einen zweiten Kipparm (5) umfassen, der drehbar am Trägerarm (3) gelagert ist und umfassend einen ersten Arm (148), der mit der Stange des Ausstoßkolbens (6) wirkverbunden ist, und einen zweiten Bewegungsgreifarm (149), aufweisend ein Kopfstück (150), das in einem Nockenprofil (151) gleitet, das auf der Basis (8) erhalten ist, wobei der zweite Kipparm (5) eine Schwenkachse (147) aufweist, die orthogonal zur Achse (102) des Brühzylinders (101) ist, wobei das Nockenprofil (151) einen neutralen Abschnitt (152), in den das Kopfstück (150) während des Vorwärtslaufs des Steuerglieds (1) eingreift, und einen aktiven Abschnitt (153), in den das Kopfstück (150) während des Rücklaufs des Steuerglieds (1) eingreift, aufweist.

15. Kaffeemaschine nach einem oder mehreren der vorangehenden Ansprüche, **dadurch gekennzeichnet, dass** die vierten kinematischen Umwandlungsmittel einen ersten Kipparm (21) umfassen, der drehbar an der Basis (8) gelagert ist und aufweisend einen ersten Arm (139), der mit dem Schieber (20) des Drei-Wege-Ventils (121) wirkverbunden ist, und einen zweiten Bewegungsgreifarm (136), der mit dem zweiten Schlitten (23) wirkverbunden ist, wobei der erste Kipparm (21) eine Schwenkachse (137) aufweist, die parallel zur Schwenkachse (106) des Steuerglieds (1) ist.

## Revendications

1. Machine à café (100) du type comprenant un cylindre de brassage (101), définissant une chambre de brassage (17), un piston (7) pour fermer ladite chambre de brassage (17), et des moyens (10, 14) pour verrouiller la fermeture de ladite chambre de brassage, **caractérisée en ce qu'**elle comprend un élément de commande (1) actionnable de façon séquentielle le long d'une première, d'une deuxième et au moins d'une troisième partie d'une course réversible ayant un seul degré de liberté, le premier moyen de transformation cinématique permettant de transformer le déplacement dudit élément de commande (1) le long de ladite première partie de course en une rotation correspondante entre ledit cylindre de brassage (101) et ledit piston de fermeture (7) pour aligner leurs axes (102, 103) le long d'un axe commun, le deuxième moyen de transformation cinématique permettant de transformer le déplacement dudit élément de commande (1) le long de ladite deuxième partie de course en un repositionnement correspondant dudit cylindre de brassage (101) et dudit piston de fermeture (7) le long dudit axe commun pour fermer ladite chambre de brassage (17), et au moins un troisième moyen de transformation cinématique permettant de transformer le déplacement dudit élément de commande (1) le long de ladite troisième partie de course en au moins un déplacement desdits moyens de verrouillage (10, 14) afin de verrouiller la fermeture de ladite chambre de brassage (17), et **en ce qu'**elle possède un bras de support (3) dudit cylindre de brassage (101) articulé à la base (8) de ladite machine.

2. Machine à café selon la revendication 1, **caractérisée en ce que** ledit élément de commande (1) est un levier monté pivotant sur ladite base.

3. Machine à café selon l'une ou plusieurs des revendications précédentes, **caractérisée en ce que** ledit bras de support (3) possède un axe pivotant au niveau de ladite base (8) parallèle à l'axe dudit piston de fermeture (7).

4. Machine à café selon l'une ou plusieurs des revendications précédentes, **caractérisée en ce que** ledit levier de commande (1) possède un axe pivotant au niveau de ladite base (8) orthogonal à l'axe dudit piston de fermeture (7).

5. Machine à café selon l'une ou plusieurs des revendications précédentes, **caractérisée en ce que** ladite base (8) possède un guide pour guider un support dudit piston de fermeture se repositionnant dans la direction de l'axe dudit piston de fermeture (7).

6. Machine à café selon l'une ou plusieurs des revendications précédentes, **caractérisée en ce que** ledit support (14) présente à l'intérieur un conduit (110) pour acheminer la boisson qui ressort de ladite chambre de brassage (17) vers l'extérieur, et un manifold de purge (112) dudit conduit d'acheminement, ledit support présentant à l'intérieur un conduit de purge (113) de ladite chambre de brassage (17) sur le côté dudit piston de fermeture (7) communiquant avec ledit manifold de purge, ledit manifold de purge ayant des moyens à vanne (9) pour fermer le purge dudit conduit pour acheminer la boisson qui ressort de ladite chambre de brassage (17) vers l'extérieur et dudit conduit de purge (113) de ladite chambre de brassage sur le côté dudit piston de fermeture (7).

7. Machine à café selon l'une ou plusieurs des revendications précédentes, **caractérisée en ce que** ledit premier moyen de transformation cinématique comprend un arc denté (125) solidaire en rotation par rapport au dit élément de commande (1) et se mettant en prise avec une crémaillère (2) portée de façon coulissante par ladite base (8).

8. Machine à café selon l'une ou plusieurs des revendications précédentes, **caractérisée en ce que** ladite crémaillère (2) coulisse le long d'un axe coulissant orthogonal à la fois à l'axe pivotant (106) dudit élément de commande (1) et à l'axe (103) dudit piston de fermeture (7) et **en ce que** ladite crémaillère (2) possède une goupille d'entraînement (126) engagée dans une fente dudit bras de support (3) pour son actionnement.

9. Machine à café selon l'une ou plusieurs des revendications précédentes, **caractérisée en ce que** ledit second moyen de transformation cinématique comprend un second levier (12) monté pivotant sur ladite base (8) et fonctionnellement relié au dit support (14) pour son actionnement et une came d'actionnement (13) dudit second levier (12) interposée entre ledit second levier (12) et ledit élément de commande (1) par lequel ledit second levier (12) est à son tour actionnable, ladite came étant pivotante par rapport à ladite base avec le même axe de rotation (106) que ledit élément de commande à laquelle elle est associée à travers un élément de compensation élastique (15) permettant de séparer la rotation de ladite came (13) de la rotation dudit élément de commande (1) lorsque la résistance de rotation offerte par ladite came (13) excède une valeur adéquate, et ledit second levier (12) étant pivotant par rapport à ladite base (8) avec l'axe de rotation parallèle à l'axe pivotant (106) dudit élément de commande (1).

10. Machine à café selon l'une ou plusieurs des revendications précédentes, **caractérisée en ce que** les moyens de verrouillage comprennent un élément en coin (10) pouvant se mettre en prise avec au moins une crémaillère (114) fixée sur ladite base (8).

11. Machine à café selon l'une ou plusieurs des revendications précédentes, **caractérisée en ce que** ledit troisième moyen de transformation cinématique comprend un premier chariot (11) supportant ledit élément en coin (10), fixé de façon forcée au dit support dans le sens de déplacement parallèle par rapport à l'axe dudit piston de fermeture (7) mais relâché du dit support dans le sens de déplacement orthogonal à la fois à l'axe du piston de fermeture (7) et à l'axe de rotation dudit élément de commande (1), ledit élément en coin (10) étant supporté de façon coulissante par rapport au dit premier chariot (11) dans le sens de déplacement orthogonal à la fois à l'axe dudit piston de fermeture (7) et à l'axe de rotation dudit élément de commande (1), ledit élément en coin (10) étant relié au dit chariot (11) par un ressort.

12. Machine à café selon l'une ou plusieurs des revendications précédentes, **caractérisée en ce que** ledit troisième moyen de transformation cinématique comprend de plus un second chariot (23) supporté par ladite base (8) et associé au dit premier chariot (11) de façon solidaire dans le sens de déplacement orthogonal à la fois à l'axe dudit piston de fermeture (7) et à l'axe de rotation dudit élément de commande (1) et d'une façon coulissante libre par rapport au dit premier chariot (11) dans la direction de l'axe dudit piston de fermeture (7), ledit second chariot (23) portant un actionneur (133) pouvant actionner un bouton d'actionnement (16) d'une pompe d'alimentation à eau vers ladite chambre de brassage.

13. Machine à café selon l'une ou plusieurs des revendications précédentes, **caractérisée en ce qu'**elle comprend un quatrième moyen de transformation cinématique permettant de transformer le déplacement dudit élément de commande (1) le long de ladite troisième partie de course par l'actionnement d'une vanne à trois voies (121) pour ouvrir la liaison entre une voie d'aspiration (122) et une voie de distribution (123) et la fermeture d'une voie de purge (124).

14. Machine à café selon l'une ou plusieurs des revendications précédentes, **caractérisée en ce qu'**elle comprend un cinquième moyen de transformation cinématique uniquement actif lors de la course de retour dudit élément de commande (1) pour transformer son déplacement en un mouvement d'extraction et un mouvement d'escamotage dudit piston d'éjection (6) pour éjecter le conteneur de café vide, et **en ce que** ledit cinquième moyen de transformation cinématique comprend un second bras oscillant (5) monté pivotant au dit bras de support (3) et comprenant un premier bras (148) fonctionnellement relié à la tige dudit piston d'éjection (6) et un deuxième bras de préhension en mouvement (149) disposant d'une tête (150) coulissant dans un profil de came (151) obtenu sur ladite base (8), ledit second bras oscillant (5) possédant un axe pivotant (147) orthogonal à l'axe (102) dudit cylindre de brassage (101), ledit profil de came (151) a une partie neutre (152) dans laquelle ladite tête (150) se met en prise lors de ladite course vers l'avant dudit élément de commande (1) et une partie active (153) dans laquelle ladite tête (150) se met en prise lors de ladite course de retour dudit élément de commande (1).

15. Machine à café selon l'une ou plusieurs des revendications précédentes, **caractérisée en ce que** ledit quatrième moyen de transformation cinématique comprend un premier bras oscillant (21) monté pivotant à ladite base (8) et comportant un premier bras (139) fonctionnellement relié à l'entrée (20) de la vanne à trois voies (121) et un second bras de préhension en mouvement (136) fonctionnellement relié au dit second chariot (23), ledit premier bras oscillant (21) ayant un axe pivotant (137) parallèle à l'axe pivotant (106) dudit élément de commande (1).
